# EUROPEAN PATENT SPECIFICATION

(11) **EP 4 378 565 B1**
(45) Date of publication and mention of the grant of the patent: **28.01.2026**
(21) Application number: 21959266.4
(22) Date of filing: 28.09.2021
(51) Int. Cl.: B01D 53/86, B01D 45/08, C01B 21/20

(54) **DENITRATION DEVICE**
DENITRIERUNGSVORRICHTUNG
DISPOSITIF DE DÉNITRATION

(43) Date of publication of application: 05.06.2024
(73) Proprietor: Mitsubishi Heavy Industries, Ltd., Tokyo 100-8332 (JP)
(72) Inventor: NAGAI, Yoshinori, Yokohama-shi, Kanagawa 220-8401 (JP); KIRIYAMA, Koichi, Yokohama-shi, Kanagawa 220-8401 (JP); ISHIZAKI, Masafumi, Yokohama-shi, Kanagawa 220-8401 (JP); KARASUDANI, Hisashi, Yokohama-shi, Kanagawa 220-8401 (JP); ITO, Kazunori, Tokyo 100-8332 (JP); TANIGUCHI, Yukihisa, Tokyo 100-8332 (JP)
(74) Representative: Studio Torta S.p.A.
(86) International application number: PCT/JP2021/035690
(87) International publication number: WO 2023/053218

(56) References cited:
- CN-A- 102 989 315
- CN-A- 107 970 772
- CN-A- 112 138 542
- JP-A- 2005 207 697
- JP-A- 2013 086 087
- JP-A- 2014 233 671
- JP-A- 2019 147 142
- JP-A- 2020 116 491
- JP-A- 2021 094 501
- JP-A- 2022 012 043
- JP-A- H0 295 415

## Description

### TECHNICAL FIELD

The present invention relates to a denitration device. More specifically, the present invention relates to a denitration device suitable for a cement plant, etc. for discharging a gas containing highly adherent dust.

### BACKGROUND

A gas discharged from a cement kiln contains an acidic gas such as hydrogen chloride, SOₓ, or NOₓ. Therefore, in order to decrease an NOₓ concentration in the exhaust gas, a denitration agent such as ammonia or urea is added to denitrate the exhaust gas. This decomposes NOₓ (NO andNO₂) into nitrogen (N₂) and water (H₂O) by the denitration agent.

For example, Patent Document 1 discloses a cement kiln exhaust gas treatment apparatus that includes a dust collecting device for collecting dust in an exhaust gas of a cement kiln, a gas adding device for adding a gas discharged from a fermentation treatment device and containing ammonia to the exhaust gas after the dust is collected by the dust collecting device, and a catalyst device for denitrating the exhaust gas after the gas containing ammonia is added by the gas adding device.

Patent Document 2 discloses a device for processing cement kiln combustion exhaust gas characterized in that the device comprises: a dust collector collecting dust in cement kiln combustion exhaust gas; a catalyst-poisoning-substance stripper removing a catalyst-poisoning substance from the cement kiln combustion exhaust gas that passed the dust collector; a preheater heating beforehand the cement kiln combustion exhaust gas that passed the catalyst-poisoning-substance stripper; and a catalyst device removing at least one selected from nitrogen oxide, a volatile organic compound, carbon monoxide, a persistent organic pollutant, hydrocarbon and an offensive odor substance in the cement kiln combustion exhaust gas preheated by the preheater.

Not a small amount of dust remains in the exhaust gas having passed through the dust collector, and the remaining dust may be accumulated in the denitration device. As countermeasures thereagainst, various techniques have been proposed.

For example, Patent Document 3 discloses an ash dispersal nozzle structure characterized in that ash is dispersed by providing, to change an air injection direction, a mechanism for manually or automatically rotating an ash dispersal nozzle mounted by penetrating a gas duct through, in a boiler, such as a coal-fired boiler or a cement kiln exhaust gas boiler, which contains a large amount of ash in an exhaust gas, a location where ash tends to accumulate in a portion of the gas duct from a boiler outlet to a stack, in which a flow is prone to stagnation or a portion in which a flow velocity is low.

Patent Document 4 discloses a flue gas denitrizer where a catalytic reactor including a catalyst for removing nitrogen oxides in an exhaust gas in the presence of ammonia is disposed in an inlet gas duct for the exhaust gas and a plurality of ammonia water injection nozzles are disposed in an inlet gas duct region through which the exhaust gas flows in the horizontal direction upstream of the catalytic reactor, the flue gas denitrizer being characterized in that a soot blower is installed on a lower wall surface of a horizontal gas duct region in a downstream portion of the ammonia water injection nozzles.

Patent Document 5 discloses a denitration device that includes an ammonia injection pipe inserted into a transversely extending exhaust gas duct from above the exhaust gas duct, an ammonia water injection nozzle included in the ammonia injection pipe to spray ammonia water, and a denitration catalyst layer disposed downstream in a flow direction of the exhaust gas of the ammonia injection pipe, the denitration device being characterized by including a gas injection means for injecting a gas toward a bottom surface of the exhaust gas duct below the ammonia injection pipe.

Patent Document 6 discloses a flue gas nitrogen oxide treatment system where an inlet is disposed at an upper end of a reactor, an exhaust port is disposed at a lower end of the reactor, and an ash receiving tank disposed between a catalyst layer and the inlet is disposed, an ash receiving passage communicating with the ash receiving tank at one end is disposed, another end of the ash receiving passage communicates with the exhaust port, a flap and an ash discharge port are disposed in the middle of the ash receiving passage, and a compressed air nozzle is arranged in the catalyst layer.

Further, Patent Document 7 discloses an exhaust gas treatment apparatus for reducing nitrogen oxides in an exhaust gas discharged from a coal-fired boiler by a denitration device, the exhaust gas treatment apparatus including: a duct which has a horizontal duct extending in a substantially horizontal direction and a vertical duct extending in a substantially vertical direction, the horizontal duct having a front end communicating with an exhaust gas outlet of the coal-fired boiler, the horizontal duct having a rear end communicating with a lower end of the vertical duct, flows the exhaust gas discharged from the coal-fired boiler from the horizontal duct to an upper portion of the vertical duct to be introduced to the denitration device, and divides an intra-duct space; a hopper disposed below the vertical duct and communicating with the intra-duct space via a hopper upper end opening; and an oblique collision plate fixed to a rear surface of the duct extending continuously upward from a rear end edge of the hopper upper end opening and laying out a rear of the intra-duct space, and obliquely extending forward and downward from the rear surface.

Patent Document 8 discloses a flue gas treatment apparatus including a denitration apparatus having a denitration catalyst that reduces nitrogen oxides in flue gas exhausted from a coal combustion boiler, and a duct that guides the flue gas from the coal combustion boiler to the denitration apparatus, the duct being formed of a horizontal duct connected to a flue gas outlet of the coal combustion boiler, a vertical duct connected to the horizontal duct, and a hopper provided below a connecting portion where the horizontal duct and the vertical duct are connected to each other, and as a characteristic of the present invention, a collision plate that causes ash particles in the flue gas to collide with the collision plate and fall into the hopper is provided in an upper-end opening section of the hopper.

Patent Document 9 discloses a SCR flue gas denitrification device comprising an economizer, a flue gas duct, and a catalytic reactor that are sequentially connected. Such device can be applied to the pre-dust removal treatment of high-dust flue gas, and can effectively improve the dust removal efficiency, so as to prevent the occurrence of catalyst wear, clogging and poisoning.

### Citation List

### Patent Literature

Patent Document 1: JP2013-169495A
Patent Document 2: WO2006/073083A1
Patent Document 3: JPS60-57117A
Patent Document 4: JP2010-46579A
Patent Document 5: JP2010-54083A
Patent Document 6: CN109731462A
Patent Document 7: JP2019-147142A
Patent Document 8: JP2016-198701A
Patent Document 9: CN107970772
Patent Document 10: CN102989315
Patent Document 11: CN112138542
Patent Document 12: JP2022012043

### SUMMARY

### Technical Problem

The problem of the present invention is to provide a denitration device suitable for a cement plant, etc. for discharging a gas containing highly adherent dust.

### Solution to Problem

The present invention encompasses the following aspects.
[1] A denitration device, comprising:
   an inlet duct; a denitration reactor; and an outlet duct,
   wherein the denitration device allows an exhaust gas from a kiln or a furnace to flow to the inlet duct, the denitration reactor, and the outlet duct in this order, wherein the denitration reactor has a channel through which the exhaust gas flows at a linear flow velocity of 5 to 8 m/sec in a substantially vertical direction, the channel is internally provided with a screen plate and a fixed bed including a denitration catalyst in this order along a flow direction, and the fixed bed has an aperture of not less than 7 mm, the aperture being a size of an opening in the lattice, corrugated, or honeycomb-shaped catalyst body, or a size of a gap between plates in the plate-shaped catalyst body, wherein the inlet duct has on an inlet side a channel where the exhaust gas flows upward and a cross-sectional area of the channel narrows along the flow direction and has on an outlet side a channel where the exhaust gas flows downward and a cross-sectional area of the channel widens along the flow direction, a cross-sectional area of a channel between the upward flowing channel and the downward flowing channel is smaller than the cross-sectional area of the upward flowing channel and is smaller than the cross-sectional area of the downward flowing channel, a hopper is disposed in a lower portion of the upward flowing channel, and a weir is disposed around an edge of the hopper on a side near the downward flowing channel, and wherein a soot blower is disposed in a portion of the inlet duct (2) and/or the denitration reactor, where dust tends to accumulate.
[2] A cement kiln exhaust gas treatment apparatus includes: a dust collecting device for collecting dust in a cement kiln exhaust gas; and the denitration device as defined in [1] for removing nitrogen oxides in the cement kiln exhaust gas. The cement kiln exhaust gas treatment apparatus allows an exhaust gas from a cement kiln to flow to the dust collecting device and the denitration device in this order.
[3] A cement kiln exhaust gas treatment apparatus includes: the denitration device as defined in [1] for removing nitrogen oxides in a cement kiln exhaust gas; and a dust collecting device for collecting dust in the cement kiln exhaust gas. The cement kiln exhaust gas treatment apparatus allows an exhaust gas from a cement kiln to flow to the denitration device and the dust collecting device in this order.
[4] The cement kiln exhaust gas treatment apparatus as defined in [2] or [3] further includes: a waste heat recovery boiler for recovering heat of the exhaust gas, on a downstream side of the denitration device.

### Advantageous Effects

A denitration device and a cement kiln exhaust gas treatment apparatus according to the present invention can be operated at high operating rate because a channel for an exhaust gas is rarely clogged due to, for example, accumulation of highly adherent dust. The denitration device and the cement kiln exhaust gas treatment apparatus according to the present invention are easy to maintain and have low running costs.

### BRIEF DESCRIPTION OF DRAWINGS

FIG. 1 is a view showing an example of a cement kiln exhaust gas treatment apparatus according to the present invention.
FIG. 2 is a view showing an example of a denitration device according to the present invention.
FIG. 3 is a view showing another example of the denitration device according to the present invention.
FIG. 4 is a view showing another example of the denitration device according to the present invention.
FIG. 5 is a view showing arrangement of soot blowers above a fixed bed of the denitration device shown in FIG. 4.
FIG. 6 is a view showing another example of the denitration device according to the present invention.
FIG. 7 is a view showing arrangement of the soot blowers above the fixed bed of the denitration device shown in FIG. 6.
FIG. 8 is a view showing another example of arrangement of the soot blowers above the fixed bed of the denitration device.
FIG. 9 is a view showing another example of arrangement of the soot blowers above the fixed bed of the denitration device.

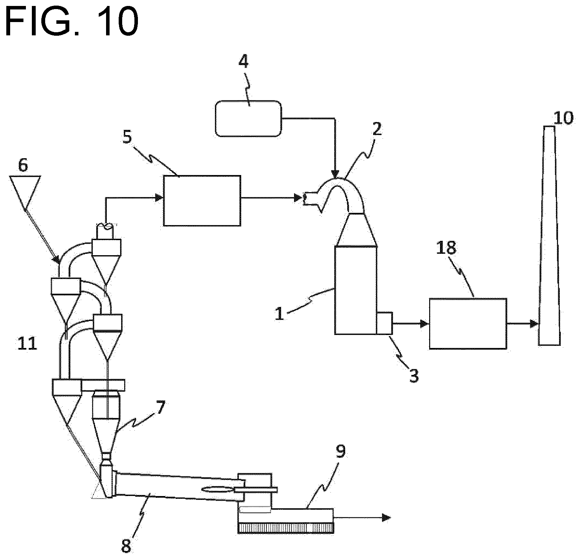

FIG. 10 is a view showing another example of the cement kiln exhaust gas treatment apparatus according to the present invention.
FIG. 11 is a view showing another example of the cement kiln exhaust gas treatment apparatus according to the present invention.

### DETAILED DESCRIPTION

Embodiments of the present invention will specifically be described with reference to the accompanying drawings. However, the scope of the present invention is not limited by the following embodiments.

A denitration device according to the present invention includes an inlet duct 2, a denitration reactor 1, and an outlet duct 3, and allows an exhaust gas G from a kiln or a furnace to flow to the inlet duct, the denitration reactor, and the outlet duct in this order.

In the inlet duct, the denitration reactor, and the outlet duct, a channel can have, for example, a rectangular, trapezoidal, circular, or elliptical cross-sectional shape as viewed from a gas flow direction. Among these shapes, the rectangular shape is preferred for ease of processing.

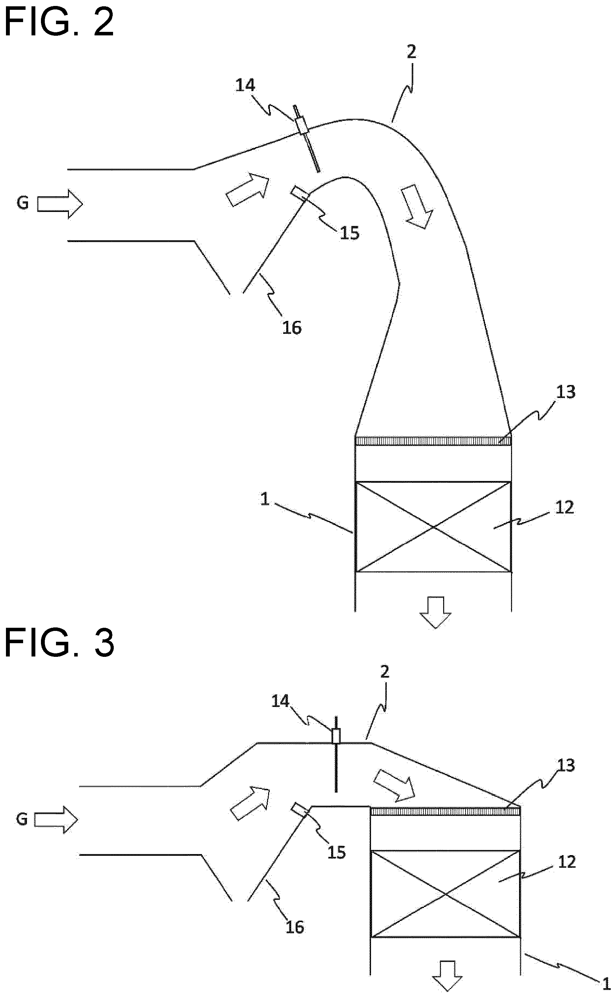

The inlet duct 2 has on an inlet side a channel where the exhaust gas flows upward, and has on an outlet side a channel where the exhaust gas flows downward. There is practically a horizontally flowing channel between the upward flowing channel and the downward flowing channel, and a wall forming the horizontally flowing channel may directly be connected to an upward wall forming the upward flowing channel and a downward wall forming the downward flowing channel as shown in FIG. 2, or may be a horizontal wall connected between the upward wall and the downward wall as shown in FIG. 3. An outlet of the inlet duct 2 is connected to an inlet of the denitration reactor 1.

A cross-sectional area of the channel disposed between the upward flowing channel and the downward flowing channel is smaller than a cross-sectional area of the upward flowing channel. It is further preferred that the cross-sectional area of the channel disposed between the upward flowing channel and the downward flowing channel be smaller than a cross-sectional area of the downward flowing channel. For example, the cross-sectional area of the upward flowing channel may narrow along a flow direction and the cross-sectional area of the downward flowing channel may widen along the flow direction. As a result, a linear flow velocity increases in the channel disposed between the upward flowing channel and the downward flowing channel, making it possible to suppress dust settling.

The upward flowing channel is provided with a hopper 16 in its lower portion. The hopper 16 increases the cross-sectional area of the upward flowing channel and decreases the linear flow velocity of the exhaust gas, allowing dust to settle easily in the hopper. Further, a weir 15 is disposed around an edge of the hopper on a side near the downward flowing channel. The weir 15 creates a vortex in a flow of the exhaust gas so that dust easily falls into the hopper, and can also prevent dust that has failed to be removed in the hopper from overflowing into a side of the downward flowing channel.

There may be an additional horizontally flowing channel in front of the upward flowing channel, as needed. The horizontally flowing channel in front of the upward flowing channel is configured to introduce an exhaust gas from a cement kiln, a boiler, etc. into the upward flowing channel.

The denitration reactor 1 has a channel through which the exhaust gas flows in a substantially vertical direction. In the denitration reactor, a cross-sectional area of the channel is set such that the exhaust gas flows at a linear flow velocity of 4 to 8 m/sec.

An outlet of the denitration reactor is usually connected to an inlet of the outlet duct.

In the channel of the denitration reactor, a screen plate 13 and a fixed bed 12 including a denitration catalyst are disposed in this order along the flow direction.

The screen plate 13 is usually disposed on an inlet side of the denitration reactor. A structure supporting the screen plate, for example, a beam, etc. passed through in the denitration reactor can be installed on the inlet side of the denitration reactor. The screen plate is supported in the denitration reactor by the screen plate support structure.

The screen plate preferably includes a plurality of slats. The plurality of slats are usually arranged such that their main surfaces are parallel to each other. In order to secure such arrangement of plurality of slats, wires or plate materials (cross members) may be joined to the respective slats along a direction orthogonal to the main surfaces of the respective slats, forming a lattice. Further, outer frame materials (end members) may be disposed at both ends of the plurality of slats.

The screen plate is preferably installed on the inlet side of the channel of the denitration reactor over an entire channel cross-section such that a long side of the slat is substantially orthogonal to the horizontal gas flow direction in the inlet duct.

The catalyst fixed bed 12 is usually disposed on an outlet side of the denitration reactor. A structure supporting the catalyst fixed bed, for example, a beam, etc. passed through in the denitration reactor can be installed on the outlet side of the denitration reactor. The catalyst fixed bed is supported in the denitration reactor by the catalyst fixed bed support structure. Although only a single stage of catalyst fixed bed is disposed in FIG. 2, multiple stages of catalyst fixed beds may be disposed as necessary.

The fixed bed disposed in the denitration reactor is loaded with a catalyst body in the form of a lattice, corrugated, honeycomb, plate, etc. The catalyst body includes an active component of a denitration catalyst. As an example of the active component of the denitration catalyst, a component (titanium-based catalyst) containing oxides of titanium, oxides of molybdenum and/or tungsten, and oxides of vanadium; a component (zeolite-based catalyst) containing mainly aluminosilicate such as zeolite with a metal such as Cu or Fe supported; and a component obtained by mixing the titanium-based catalyst and the zeolite-based catalyst can be given.

The fixed bed has an aperture of not less than 7 mm, preferably not less than 10 mm. An upper limit of the aperture is preferably 20 mm. The aperture is a size of an opening in the lattice, corrugated, or honeycomb-shaped catalyst body, and a size of a gap between plates in the plate-shaped catalyst body.

A soot blower 14 is disposed in a portion of the inlet duct and/or the denitration reactor, where dust tends to accumulate.

The soot blower is configured to blow an injection medium to blow away adhered dust. For example, water, steam, compressed air (or a pressure wave), etc. is used as the injection medium. A nozzle is installed in a tube called a lance, and the injection medium is ejected from the nozzle. Depending on operation of the lance, the soot blower may be called a reciprocating soot blower, a stationary soot blower, a long-retractable soot blower, a rotary soot blower, etc. A length and shape of the lance, as well as the number of nozzles can be set as appropriate in accordance with a size of the channel in the inlet duct and/or the denitration reactor.

As one of installation locations of the soot blower, the channel, of the inlet duct, disposed between the upward flowing channel and the downward flowing channel can be given. An injection device for the denitration agent such as ammonia or urea may be disposed here, and thus the injection device and the soot blower may integrally be installed (for example, see Patent Document 4, 5, etc.).

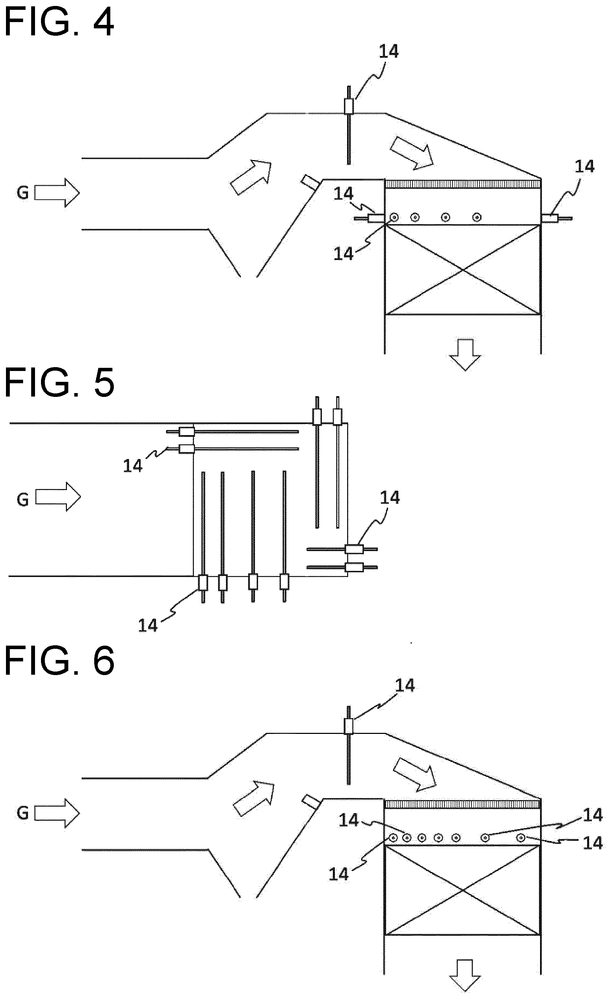

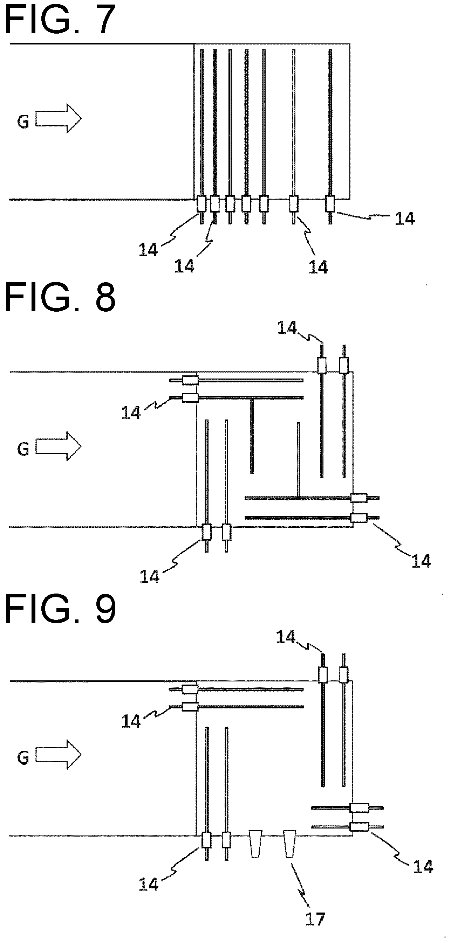

As one of other installation locations of the soot blower, a gas inflow side of the screen plate or the fixed bed in the denitration reactor can be given. Dust tends to adhere to the gas inflow side of the screen plate or the fixed bed. The soot blowers can be arranged in the denitration reactor, for example, as shown in FIG. 5, 7, 8, or 9. It is preferable to arrange lances or nozzles at a high density in a place where dust tends to accumulate (specifically, near a wall, a horizontal portion, etc.). Further, as shown in FIG. 7, the soot blowers are preferably installed such that a long side of the lance is substantially orthogonal to the horizontal gas flow direction in the inlet duct. Furthermore, as shown in FIG. 9, a sonic horn 17 can be used together.

In the denitration device according to the present invention, the hopper, the weir, and the soot blower disposed in the inlet duct can effectively remove dust from the exhaust gas. In the denitration device according to the present invention, dust hardly accumulates on the screen plate and the fixed bed disposed in the denitration reactor. As a result, it is possible to suppress a decrease in denitration rate due to dust accumulation.

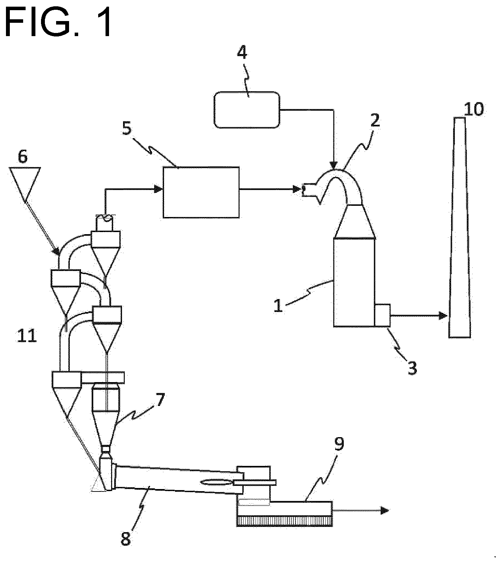

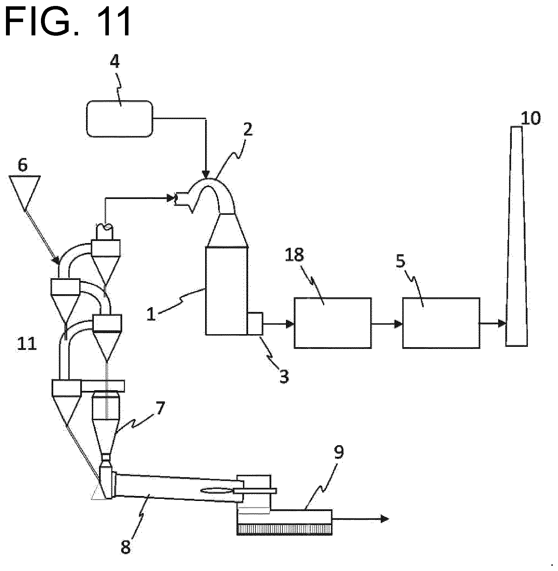

A cement kiln exhaust gas treatment apparatus according to the present invention includes a dust collecting device 5 and the denitration device. The dust collecting device 5 may be disposed upstream of the denitration device as shown in FIG. 1, or may be disposed downstream of the denitration device as shown in FIG. 11. The dust collecting device that can be disposed downstream of the denitration device can be an electric dust precipitator for low-temperature gas. The electric dust precipitator for low-temperature gas is less expensive than an electric dust precipitator for high-temperature gas in terms of a facility cost.

Further, a cement kiln exhaust gas treatment apparatus according to the present invention preferably further includes a waste heat recovery boiler. A waste heat recovery boiler 18 may be disposed upstream of the denitration device, or may be disposed downstream of the denitration device as shown in FIG. 11. The waste heat recovery boiler 18 and the dust collecting device 5 may be arranged in the order shown in FIG. 11, or may be arranged in a reverse order. Heat can effectively be utilized by the waste heat recovery boiler. Steam generated by the boiler can also be used as the injection medium for the soot blower.

### Reference Signs List

- 1:: Denitration reactor
- 2:: Inlet duct
- 3:: Outlet duct
- 4:: Denitration agent addition device
- 5:: Dust collecting device
- 6:: Cement raw material
- 7:: Calciner
- 8:: Cement kiln
- 9:: Clinker cooler
- 10:: Stack
- 11:: Preheater
- 12:: Catalyst fixed bed
- 13:: Screen plate
- 14:: Soot blower
- 15:: Weir
- 16:: Hopper
- 17:: Sonic horn
- 18:: Waste heat recovery boiler
- G:: Exhaust gas

## Claims

1. A denitration device, comprising:
an inlet duct (2); a denitration reactor (1); and an outlet duct (3),
wherein the denitration device allows an exhaust gas from a kiln or a furnace to flow to the inlet duct (2), the denitration reactor (1), and the outlet duct (3) in this order,
wherein the denitration reactor (1) has a channel through which the exhaust gas flows at a linear flow velocity of 5 to 8 m/sec in a substantially vertical direction, the channel is internally provided with a screen plate (13) and a fixed bed (12) including a denitration catalyst in this order along a flow direction, and the fixed bed (12) has an aperture of not less than 7 mm, the aperture being a size of an opening in the lattice, corrugated, or honeycomb-shaped catalyst body, or a size of a gap between plates in the plate-shaped catalyst body,
wherein the inlet duct (2) has on an inlet side a channel where the exhaust gas flows upward and a cross-sectional area of the channel narrows along the flow direction and has on an outlet side a channel where the exhaust gas flows downward and a cross-sectional area of the channel widens along the flow direction, a cross-sectional area of a channel between the upward flowing channel and the downward flowing channel is smaller than the cross-sectional area of the upward flowing channel and is smaller than the cross-sectional area of the downward flowing channel, a hopper (16) is disposed in a lower portion of the upward flowing channel, and a weir (15) is disposed around an edge of the hopper (16) on a side near the downward flowing channel, and
wherein a soot blower is disposed in a portion of the inlet duct (2) and/or the denitration reactor (1), where dust tends to accumulate.

2. A cement kiln exhaust gas treatment apparatus, comprising:
a dust collecting device (5) for collecting dust in a cement kiln exhaust gas; and
the denitration device according to claim 1 for removing nitrogen oxides in the cement kiln exhaust gas,
wherein the cement kiln exhaust gas treatment apparatus allows an exhaust gas from a cement kiln to flow to the dust collecting device (5) and the denitration device in this order.

3. A cement kiln exhaust gas treatment apparatus, comprising:
the denitration device according to claim 1 for removing nitrogen oxides in a cement kiln exhaust gas; and
a dust collecting device (5) for collecting dust in the cement kiln exhaust gas,
wherein the cement kiln exhaust gas treatment apparatus allows an exhaust gas from a cement kiln to flow to the denitration device and the dust collecting device (5) in this order.

4. The cement kiln exhaust gas treatment apparatus according to claim 2 or 3, further comprising:
a waste heat recovery boiler (18) for recovering heat of the exhaust gas, on a downstream side of the denitration device.

## Patentansprüche

1. Denitrierungsvorrichtung, umfassend:
ein Einlassrohr (2); einen Denitrierungsreaktor (1); und ein Auslassrohr (3),
wobei die Denitrierungsvorrichtung einem Abgas aus einem Ofen oder einem Hochofen erlaubt, zu dem Einlassrohr (2), dem Denitrierungsreaktor (1) und
dem Auslassrohr (3) zu strömen, und zwar in dieser Reihenfolge,
wobei der Denitrierungsreaktor (1) einen Kanal aufweist, durch den das Abgas mit einer linearen Strömungsgeschwindigkeit von 5 bis 8 m/s in einer im Wesentlichen vertikalen Richtung strömt, der Kanal intern mit einer Siebplatte (13) und einem Festbett (12) einschließlich eines Denitrierungskatalysators in dieser Reihenfolge entlang einer Strömungsrichtung versehen ist, und das Festbett (12) eine Apertur von nicht weniger als 7 mm aufweist, wobei die Apertur eine Größe einer Öffnung in dem gitter-, wellen- oder wabenförmigen Katalysatorkörper oder eine Größe eines Spalts zwischen Platten in dem plattenförmigen Katalysatorkörper ist,
wobei das Einlassrohr (2) auf einer Einlassseite einen Kanal aufweist, wo das Abgas nach oben strömt und sich ein Querschnittsbereich des Kanals entlang der Strömungsrichtung verjüngt, und auf einer Auslassseite einen Kanal aufweist, wo das Abgas nach unten strömt und sich ein Querschnittsbereich des Kanals entlang der Strömungsrichtung verbreitert, ein Querschnittsbereich eines Kanals zwischen dem Aufwärtsströmungskanal und dem Abwärtsströmungskanal kleiner ist als der Querschnittsbereich des Aufwärtsströmungskanals und kleiner ist als der Querschnittsbereich des Abwärtsströmungskanals, ein Trichter (16) in einem unteren Abschnitt des Aufwärtsströmungskanals angeordnet ist und ein Wehr (15) um eine Kante des Trichters (16) herum auf einer Seite nahe dem Abwärtsströmungskanal angeordnet ist, und
wobei ein Rußgebläse in einem Abschnitt des Einlassrohrs (2) und/oder des Denitrierungsreaktors (1) angeordnet ist, wo sich tendenziell Staub ansammelt.

2. Zementofen-Abgasnachbehandlungsvorrichtung, umfassend:
eine Staubsammel- bzw. -abscheidevorrichtung (5) zum Sammeln bzw. Abscheiden von Staub in bzw. aus einem Zementofenabgas; und
die Denitrierungsvorrichtung nach Anspruch 1 zum Entfernen von Stickoxiden in bzw. aus dem Zementofenabgas,
wobei die Zementofen-Abgasnachbehandlungsvorrichtung einem Abgas aus einem Zementofen erlaubt, zu der Staubabscheidevorrichtung (5) und zu der Denitrierungsvorrichtung zu strömen, und zwar in dieser Reihenfolge.

3. Zementofen-Abgasnachbehandlungsvorrichtung, umfassend:
die Denitrierungsvorrichtung nach Anspruch 1 zum Entfernen von Stickoxiden in bzw. aus einem Zementofenabgas; und
eine Staubsammel- bzw. -abscheidevorrichtung (5) zum Sammeln bzw. Abscheiden von Staub in bzw. aus dem Zementofenabgas,
wobei die Zementofen-Abgasnachbehandlungsvorrichtung einem Abgas aus einem Zementofen erlaubt, zu der Denitrierungsvorrichtung und zu der Staubabscheidevorrichtung (5) zu strömen, und zwar in dieser Reihenfolge.

4. Zementofen-Abgasnachbehandlungsvorrichtung nach Anspruch 2 oder 3, ferner umfassend:
einen Abwärmerückgewinnungskessel (18) zum Rückgewinnen von Wärme des Abgases, auf einer stromabwärtigen Seite der Denitrierungsvorrichtung.

## Revendications

1. Dispositif de dénitration, comprenant :
un conduit d'entrée (2) ; un réacteur de dénitration (1) ; et un conduit de sortie (3),
dans lequel le dispositif de dénitration permet à un gaz d'échappement provenant d'un four rotatif ou d'un four de s'écouler vers le conduit d'entrée (2), le réacteur de dénitration (1) et le conduit de sortie (3) dans cet ordre,
dans lequel le réacteur de dénitration (1) comporte un canal à travers lequel le gaz d'échappement s'écoule à une vitesse d'écoulement linéaire de 5 à 8 m/s dans une direction sensiblement verticale, le canal est pourvu intérieurement d'une plaque de tamisage (13) et d'un lit fixe (12) comprenant un catalyseur de dénitration dans cet ordre le long d'une direction d'écoulement, et le lit fixe (12) présente une ouverture de pas moins de 7 mm, l'ouverture étant d'une taille d'une ouverture dans le corps de catalyseur à structure en treillis, ondulée ou en nid d'abeille, ou
une taille d'un espace entre des plaques dans le corps catalytique en forme de plaque,
dans lequel le conduit d'entrée (2) présente, sur un côté entrée, un canal où le gaz d'échappement s'écoule vers le haut et une zone de section transversale du canal se rétrécit le long de la direction d'écoulement et présente, sur un côté sortie, un canal où le gaz d'échappement s'écoule vers le bas et une zone de section transversale du canal s'élargit le long de la direction d'écoulement, une zone de section transversale d'un canal entre le canal d'écoulement vers le haut et le canal d'écoulement vers le bas est plus petite que la zone de section transversale du canal d'écoulement vers le haut et est plus petite que la zone de section transversale du canal d'écoulement vers le bas, une trémie (16) est disposée dans une partie inférieure du canal d'écoulement vers le haut, et un déversoir (15) est disposé autour d'un bord de la trémie (16) sur un côté proche du canal d'écoulement vers le bas, et
dans lequel un dispositif de soufflage de suie est disposé dans une partie du conduit d'entrée (2) et/ou du réacteur de dénitration (1), où la poussière a tendance à s'accumuler.

2. Appareil de traitement de gaz d'échappement de four à ciment, comprenant :
un dispositif de collecte de poussière (5) pour collecter la poussière dans un gaz d'échappement de four à ciment ; et
le dispositif de dénitration selon la revendication 1 pour éliminer les oxydes d'azote dans le gaz d'échappement de four à ciment,
dans lequel l'appareil de traitement de gaz d'échappement de four à ciment permet à un gaz d'échappement provenant d'un four à ciment de s'écouler vers le dispositif de collecte de poussière (5) et le dispositif de dénitration dans cet ordre.

3. Appareil de traitement de gaz d'échappement de four à ciment, comprenant :
le dispositif de dénitration selon la revendication 1 pour éliminer les oxydes d'azote dans un gaz d'échappement de four à ciment ; et
un dispositif de collecte de poussière (5) pour collecter la poussière dans le gaz d'échappement de four à ciment,
dans lequel l'appareil de traitement de gaz d'échappement de four à ciment permet à un gaz d'échappement provenant d'un four à ciment de s'écouler vers le dispositif de dénitration et le dispositif de collecte de poussière (5) dans cet ordre.

4. Appareil de traitement de gaz d'échappement de four à ciment selon la revendication 2 ou 3, comprenant en outre :
une chaudière de récupération de chaleur résiduelle (18) pour récupérer la chaleur du gaz d'échappement, d'un côté aval du dispositif de dénitration.
